# FASCICULE DE BREVET EUROPEEN

(11) **EP 2 792 587 B1**
(45) Date de publication et mention de la délivrance du brevet: **13.12.2017**
(21) Numéro de dépôt: 14001362.4
(22) Date de dépôt: 15.04.2014
(51) Int. Cl.: B62K 25/04, B62K 25/22, B62K 25/16

(54) **Suspension de cycle du type à quadrilatère déformable**
Aufhängung eines Fahrrads mit deformierbarem Parallelogramm
Bicycle suspension with deformable parallelogramme

(30) Priorité: 15.04.2013 FR 1300900
(43) Date de publication de la demande: 22.10.2014
(73) Titulaire: M-OTION ENGINEERING, 69400 Villefranche sur Saone (FR)
(72) Inventeur: Alfano, Matthieu, 01480 Fareins (FR)
(74) Mandataire: IP Trust

(56) Documents cités:
- EP-A1- 0 001 344
- FR-A1- 2 478 011
- FR-A1- 2 497 170
- FR-A1- 2 506 711
- US-A- 4 533 153

## Description

La présente invention concerne la conception et la réalisation d'une suspension de cycle telle que celles qui sont destinées à se placer en montage de la roue directrice du cycle, à l'avant de ce dernier.

Actuellement, la technologie la plus utilisée dans les suspensions de cycle implique une fourche télescopique composée d'un ensemble coulissant fourreaux/plongeurs de formes cylindriques intégrant un dispositif amortisseur. Ce type de suspension est sensible au phénomène de plongée, c'est à dire que le freinage engendre une compression de la suspension même en l'absence de choc. Le débattement de la suspension est alors réduit, ce qui réduit d'autant ses capacités d'amortissement. Il en résulte une perte d'adhérence et de confort. De plus, la compression de la fourche télescopique engendre la modification de la géométrie du cycle, ce qui conduit généralement à une dégradation de la stabilité. Enfin, les efforts subis par la fourche télescopique - qu'ils soient dus aux freinages ou non - déforment l'ensemble fourreaux/plongeurs et engendrent des frictions qui dégradent le fonctionnement de la suspension. On ajoutera que la conception fourreaux/plongeurs cylindriques limite les performances en termes de guidage ; un surdimensionnement de ces éléments est nécessaire pour atteindre une rigidité latérale acceptable.

Afin de palier à ces inconvénients, des suspensions non télescopiques dites à quadrilatère déformable ont été développées. Cette technologie permet de dissocier la fonction de guidage coulissant de celle d'amortissement en mobilité longitudinale, laquelle est alors généralement assurée par un dispositif amortisseur indépendant. Les liaisons articulées entre les éléments constituant le quadrilatère déformable peuvent se positionner de telle sorte que le Centre Instantané de Rotation (CIR) de l'élément fourche supportant la roue se situe à l'arrière de la trajectoire dessinée par l'axe de la roue avant par rapport au sens de déplacement du véhicule. Dans ce cas, toute compression de la suspension induit un mouvement de rotation de la fourche contraire au mouvement de rotation de la roue avant lorsque le cycle avance. Ce type de suspension présente alors un comportement anti-plongée lors du freinage grâce à la transmission du couple de freinage à la fourche - via un système de freinage fixé à la fourche - qui tend à détendre la suspension.

Si ce type de suspension permet de résoudre nombre d'inconvénients des fourches télescopiques, les solutions de suspensions à quadrilatère déformable existantes font apparaître deux inconvénients persistants. Le premier est que la position du CIR de la fourche n'est pas stable ; elle varie de façon excessive pendant la compression de la suspension, ce qui ne permet pas d'optimiser le comportement anti-plongée pour l'ensemble de la plage de fonctionnement de la suspension. Le second est que l'architecture du parallélogramme régulier classique ne permet pas l'intégration de l'amortisseur indépendant. Celui-ci doit alors être déporté. Il s'ensuit soit des contraintes de flexion supplémentaires, d'où une réduction des performances de la suspension, soit le besoin d'ajouter des pièces supplémentaires qui augmentent la masse de l'ensemble et peuvent diminuer les performances de la suspension, réduire sa fiabilité et induire des difficultés d'intégration sur les cycles.

Par ailleurs, dans le domaine des motocycles, comme indiqué dans le document FR 2506 711, la suspension à quadrilatère déformable comprend un pivot de fourche ayant une fonction de pivot classique en ce sens qu'il est en liaison pivot avec le cadre général du motocycle et son extrémité opposée à cette liaison pivot n'est articulée à aucune autre pièce. C'est une fourche supérieure et des éléments de liaison qui assurent l'articulation entre le poste de guidage et la fourche inférieure. Cette structure présente différents inconvénients puisque la fourche supérieure constitue une pièce complexe qui complique l'extraction du pivot de fourche du cadre, augmente l'encombrement, alourdit la suspension, diminue la fiabilité et en augmente le prix, rendant difficile son intégration à un cycle simple.

La suspension selon l'invention permet de remédier à ces inconvénients des suspensions de cycle dites anti-plongée à quadrilatère déformable telles qu'elles sont réalisées actuellement. A l'origine de l'invention il est apparu que ces inconvénients sont essentiellement liés au fait que dans les systèmes connus les quatre éléments articulés entre eux du quadrilatère forment globalement un parallélogramme régulier.

La suspension de cycle suivant l'invention comporte de manière en soi connue, une fourche support de la roue directrice avant du cycle et un pivot de fourche solidaire du poste de pilotage (tel un guidon) entre lesquels est interposé un dispositif amortisseur et qui sont reliés entre eux par deux éléments de liaison de manière à former ensemble un quadrilatère déformable, dans une disposition telle que le CIR de la fourche, définie comme l'intersection des deux droites passant respectivement par les axes des liaisons articulées de chacun des deux éléments de liaison avec d'une part le pivot de fourche et d'autre part la fourche, se situe normalement à l'arrière de la trajectoire dessinée par l'axe de la roue avant quand le cycle avance. Selon les règles du métier, on prévoit de manière plus précise, dans les modes de réalisation pratiques de l'ensemble, que la fourche de la suspension accueille la roue avant directrice tandis que le pivot de fourche, lié rigidement au poste de pilotage, est lié au cadre du cycle par une liaison de type pivot.

A cet effet, l'invention se rapporte à une suspension de cycle à quadrilatère déformable, dans laquelle ledit quadrilatère déformable comporte une fourche de montage d'une roue directrice du cycle, un pivot de fourche monté fixe avec un poste de pilotage sur un cadre général du cycle par une liaison pivotante, et un premier et un second éléments de liaison articulés sur la fourche et sur le pivot de fourche en leurs extrémités opposées respectives, le pivot de fourche comprenant deux liaisons articulées A et B avec les deux éléments de liaison, ces les liaisons articulées A et B du pivot de fourche étant situées de part et d'autre de l'axe de la liaison pivotante entre le pivot de fourche et le cadre général O du cycle, les longueurs respectives [BC] et [AD] dudit premier élément de liaison et dudit second élément de liaison (4) étant chacune au moins deux fois supérieures à l'entre-axe [CD] de leurs liaisons articulées respectives avec la fourche, de telle sorte que lors de la déformation du quadrilatère du fait de ses quatre liaisons articulées (A, B, C, D) dans un plan normal à l'axe de ladite roue directrice, la position du Centre Instantané de Rotation de la fourche par rapport au pivot de fourche, définie comme l'intersection des droites passant respectivement par les axes des liaisons articulées du premier élément de liaison avec le pivot de fourche et la fourche et les axes des liaisons articulées du second élément de liaison avec le pivot de fourche et la fourche , se situe à l'arrière de la trajectoire dessinée par l'axe de la roue directrice par rapport au sens de déplacement du cycle.

Selon l'une des caractéristiques de l'invention, les deux éléments de liaison de la fourche au pivot de fourche sont relativement longs par rapport à l'entre-axe de leurs points d'articulation respectifs avec la fourche, de telle sorte que le quadrilatère déformable se dispose toujours globalement orienté longitudinalement par rapport à une ligne imaginaire formée entre l'axe de rotation de la roue et l'axe du pivot de fourche sur le poste de pilotage. On assure ainsi que le CIR reste stable dans sa position à l'arrière de la trajectoire de l'axe de rotation de la roue au cours des déplacements du cycle.

Cette caractéristique propre à l'invention dans une suspension de cycle du type à quadrilatère déformable s'exprime au mieux par le fait que, conformément à des modes de mise en oeuvre préférés de l'invention, les deux éléments de liaison articulée entre la fourche et le pivot de fourche sont chacun de longueur au moins deux fois supérieure à l'entre-axe de leurs articulations respectives sur la fourche. Cette caractéristique implique qu'un faible déplacement angulaire des deux éléments de liaison précités, et donc par définition un faible déplacement du CIR de la fourche, engendrera un déplacement angulaire de la fourche important. En d'autres termes, cette caractéristique permet d'optimiser le comportement anti-plongée de la fourche sur toute sa plage de fonctionnement en limitant le déplacement du CIR de la fourche lors de la compression ou de la détente de la suspension.

De plus, et conformément à une caractéristique secondaire de l'invention, la longueur relative des deux éléments de liaison permet d'intégrer un amortisseur indépendant grâce à l'espace libéré au sein du quadrilatère déformable.

Parmi les modes particuliers de réalisation de la suspension de cycle suivant l'invention, on notera notamment les suivants, pour les caractéristiques secondaires de mise en oeuvre de l'invention qu'ils impliquent et l'intérêt que ces caractéristiques secondaires présentent : Les deux éléments de liaison de la fourche au pivot de fourche peuvent être des bielles ou ensemble de bielles - montage de bielles coaxiales - dont les liaisons avec la fourche et le pivot de fourche sont de type rotule ou pivot et dont deux liaisons adjacentes (en termes de chaîne cinématique) au moins du quadrilatère sont de type pivot. L'amortisseur indépendant peut avantageusement être intégré au quadrilatère déformable selon les règles du métier et les caractéristiques d'amortissement recherchées. Chacune des deux extrémités de l'amortisseur indépendant peuvent soit directement être liées à un des éléments du quadrilatère déformable, comme directement à leurs articulations, soit être liées à un ensemble d'éléments lui-même lié au quadrilatère déformable, comme un ensemble biellette/basculeur.
L'ensemble des liaisons entre les éléments constituant le quadrilatère déformable peut être positionné sous la liaison du pivot de fourche avec le cadre afin de limiter toute interaction avec d'autres éléments du cycle et de permettre le montage de l'ensemble sur un cadre conventionnel. Les deux liaisons articulées entre le pivot de fourche et les deux éléments de liaison entre le pivot de fourche et la fourche peuvent être situées de part et d'autre de l'axe de la liaison pivot entre le pivot de fourche et le cadre, ce qui permet de limiter les efforts retransmis au pivot de fourche en limitant les portes à faux et donc les efforts de flexion et de torsion. Le quadrilatère déformable peut être conçu de telle sorte qu'aucune de ses liaisons ne soient situées à l'intérieur de l'espace cylindrique délimité par le pourtour de la roue avant selon la direction de son axe, afin de limiter les difficultés de mise en oeuvre des liaisons et d'intégration de l'amortisseur indépendant du fait de la présence de la roue et de ses éléments.
L'invention concerne également un véhicule équipé d'une unique roue avant directrice équipé d'une suspension à quadrilatère déformable, dans laquelle ledit quadrilatère déformable comporte une fourche de montage d'une roue directrice du cycle, un pivot de fourche monté fixe avec un poste de pilotage sur un cadre général O du cycle par une liaison pivotante, et un premier et un second éléments de liaison articulés sur la fourche et sur le pivot de fourche en leurs extrémités opposées respectives, le pivot de fourche comprenant deux liaisons articulées A et B avec les deux éléments de liaison, ces les liaisons articulées A et B du pivot de fourche étant situées de part et d'autre de l'axe de la liaison pivotante entre le pivot de fourche et le cadre général O du cycle, les longueurs respectives [BC] et [AD] dudit premier élément de liaison et dudit second élément de liaison étant chacune au moins deux fois supérieures à l'entre-axe [CD] de leurs liaisons articulées respectives avec la fourche, de telle sorte que lors de la déformation du quadrilatère du fait de ses quatre liaisons articulées (A, B, C, D) dans un plan normal à l'axe de ladite roue directrice , la position du Centre Instantané de Rotation de la fourche par rapport au pivot de fourche , définie comme l'intersection des droites passant respectivement par les axes des liaisons articulées du premier élément de liaison avec le pivot de fourche et la fourche et les axes des liaisons articulées du second élément de liaison avec le pivot de fourche et la fourche, se situe à l'arrière de la trajectoire dessinée par l'axe de la roue directrice par rapport au sens de déplacement du cycle.

Les dessins annexés illustrent la mise en oeuvre de l'invention dans ses modes de réalisation pratique préférés : La figure 1 est un schéma en deux dimensions représentant un mode de réalisation de suspension avant de cycle à quadrilatère déformable respectant l'ensemble des requis préférés de la présente invention. Ce schéma est dessiné dans le plan contenant la trajectoire de l'axe de la roue avant du cycle. La flèche F1 indique le sens de déplacement du cycle en marche, tandis que la flèche F2 indique le sens de rotation de la roue directrice, à l'avant du cycle. Les figures 2 et 3 sont des schémas en deux dimensions des seuls éléments formant le quadrilatère déformable, représentant deux solutions d'intégration de l'amortisseur indépendant au quadrilatère déformable grâce au respect des requis de la dite invention.

En référence à ces dessins, la suspension à quadrilatère déformable selon l'invention est constituée de quatre éléments (1), (2), (3) et (4) reliés entre eux par quatre liaisons pivots (A), (B), (C) et (D). Le pivot de fourche (1) est fixe par rapport au poste de pilotage (7) et lié au cadre (0) du cycle par une liaison pivot afin de transmettre les efforts de guidage à la suspension. La fourche (3) accueille le montage de la roue (5). Les pivots (A), (B), (C) et (D) sont placés de telle sorte que la position du CIR de la fourche (3) par rapport au pivot de fourche (1), définie par l'intersection des droites (AD) et (CD), se situe à l'arrière - par rapport au sens de déplacement du cycle - de la trajectoire dessinée par l'axe de la roue avant.

Ainsi, toute compression de la suspension induit un mouvement de rotation de la fourche (3) contraire au mouvement de rotation de la roue (5) lorsque le cycle avance. Lors du freinage de la roue (5), le couplage de la fourche (3) et de la roue (5) par le système de freinage (6) - système de freinage classique lié rigidement à la fourche - permet la transmission du moment de freinage à la fourche (3) qui tend à détendre la suspension et produit alors un comportement anti-plongée.

Les longueurs des éléments de liaison (2) et (4), notées respectivement [BC] et [AD], sont au moins deux fois supérieures à l'entre-axe des liaisons pivots (C) et (D), noté [CD]. Selon les règles du métier, le positionnement relatif des différentes liaisons articulées(A), (B), (C) et (D) permet de définir la trajectoire de l'axe de la roue (5) ainsi que la position du CIR qui agit sur le comportement anti-plongée de la suspension.

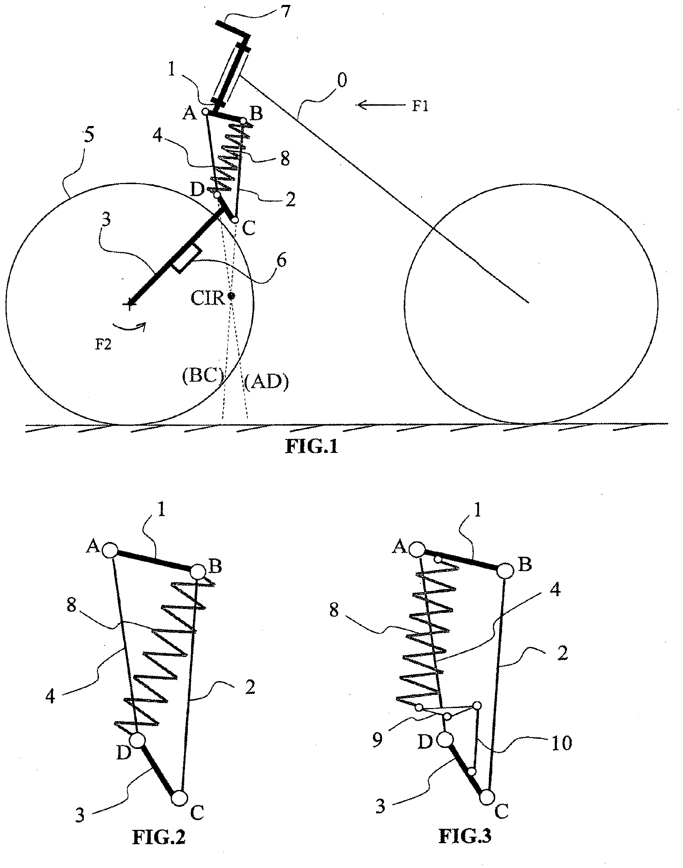

Dans la forme de réalisation selon la figure 1 , les pivots (A) et (B) sont placés sous la liaison pivot entre le cadre (O) et le pivot de fourche (1) afin de permettre un montage de la suspension de façon identique à celui des fourches télescopiques traditionnelles pour le cas particulier des vélos, et de part et d'autre de l'axe de la liaison pivot entre le pivot de fourche (1) et le cadre (0) afin de limiter les efforts de flexion et de torsion retransmis au pivot de fourche (1). Les pivots (C) et (D) sont eux aussi placés sous la liaison pivot entre le cadre (O) et le pivot de fourche (1) afin d'éviter toute interaction avec d'autres éléments du cycle. Le quadrilatère déformable ABCD est conçu de telle sorte qu'aucune de ses liaisons articulées (A), (B), (C) et (D) ne soit située à l'intérieur de l'espace cylindrique délimité par le pourtour de la roue avant (5) selon la direction de son axe. Grâce à cette disposition, on limite les difficultés de mise en oeuvre de ces liaisons et les difficultés d'intégration de l'amortisseur indépendant (8) liées à la présence de la roue (5) et de ses éléments.

Dans la forme de réalisation selon la figure 2, l'amortisseur indépendant (8) est directement placé entre les axes (B) et (D). Ceci permet de limiter le nombre d'axes nécessaires au montage et simplifie au mieux la structure.

Dans la forme de réalisation selon la figure 3, l'amortisseur indépendant (8) est lié directement au pivot de fourche (1) pour l'une de ses extrémités et, pour son autre extrémité, il est lié à une pièce de renvoi d'effort (9) appelée basculeur qui est elle-même reliée à la fourche (3) par l'intermédiaire d'une pièce de liaison (10) appelée biellette, dans un montage tel que ni l'amortisseur (8), ni les pièces de liaison (9) et (10) ne soient situés dans l'espace à l'intérieur du cylindre délimité par le pourtour de la roue (5) selon la direction de son axe, et ce quel que soit l'état de compression de la suspension. Ce montage permet d'améliorer la progressivité de la courbe de compression de l'amortisseur.

La présente invention est particulièrement adaptée pour la réalisation d'une suspension avant d'un véhicule équipé d'une unique roue directrice à l'avant du cycle, comme le sont les deux roues ou les tricycles, et plus particulièrement les cycles tels que les vélos en général, en particulier les vélos tous terrains (VTT), les motos ou les scooters.

## Revendications

1. Suspension de cycle à quadrilatère déformable, dans laquelle ledit quadrilatère déformable comporte une fourche (3) de montage d'une roue directrice (5) du cycle, un pivot de fourche (1) monté fixe avec un poste de pilotage (7) sur un cadre général (O) du cycle par une liaison pivotante, et un premier et un second éléments de liaison (2 et 4) articulés sur la fourche (3) et sur le pivot de fourche (1) en leurs extrémités opposées respectives, le pivot de fourche (1) comprenant deux liaisons articulées (A et B) avec les deux éléments de liaison (2 et 4), ces les liaisons articulées (A et B) du pivot de fourche étant situées de part et d'autre de l'axe de la liaison pivotante entre le pivot de fourche (1) et le cadre général (O) du cycle, les longueurs respectives [BC] et [AD] dudit premier élément de liaison (2) et dudit second élément de liaison (4) étant chacune au moins deux fois supérieures à l'entre-axe [CD] de leurs liaisons articulées respectives avec la fourche (3), de telle sorte que lors de la déformation du quadrilatère du fait de ses quatre liaisons articulées (A, B, C, D) dans un plan normal à l'axe de ladite roue directrice (5), la position du Centre Instantané de Rotation de la fourche (3) par rapport au pivot de fourche (1), définie comme l'intersection des droites passant respectivement par les axes des liaisons articulées du premier élément de liaison (2) avec le pivot de fourche (1) et la fourche (3) et les axes des liaisons articulées du second élément de liaison (4) avec le pivot de fourche (1) et la fourche (3), se situe à l'arrière de la trajectoire dessinée par l'axe de la roue directrice par rapport au sens de déplacement du cycle.

2. Suspension de cycle selon la revendication 1, **caractérisée en ce que** les deux éléments de liaison (2 et 4) de la fourche (3) au pivot de fourche (1) sont des bielles ou un ensemble de bielles dont les liaisons avec la fourche (3) et le pivot de fourche (1) sont de type rotule ou pivot et dont deux liaisons adjacentes, en termes de chaîne cinématique, au moins du quadrilatère sont de type pivot.

3. Suspension de cycle selon l'une des revendications précédentes, **caractérisée en ce qu'**un dispositif amortisseur (8) est intégré au sein du quadrilatère déformable.

4. Suspension de cycle suivant la revendication précédente, dans laquelle une extrémité supérieure de l'amortisseur (8) est liée au pivot de fourche (1) via une liaison pivot tandis qu'une extrémité inférieure dudit amortisseur (8) est liée via une liaison pivot à un basculeur (9) formant pièce de liaison, ledit basculeur (9) étant lui-même lié d'une part au second élément de liaison (4) via une liaison pivot et d'autre part, via une liaison pivot, à une biellette (10) elle-même liée à la fourche (3) via une liaison pivot.

5. Suspension de cycle suivant la revendication précédente, dans laquelle deux extrémités opposées de l'amortisseur intégré au sein du quadrilatère déformable sont respectivement liées à l'axe de la liaison (B) entre le premier élément de liaison (2) et le pivot de fourche (1) et à l'axe de la liaison (D) entre le second élément de liaison (4) et la fourche (3).

6. Suspension de cycle suivant la revendication 1, **caractérisée en ce que** le quadrilatère déformable est conçu de telle sorte qu'aucune des liaisons articulées (A, B, C, D) n'est située à l'intérieur de l'espace cylindrique délimité par le pourtour de la roue avant selon la direction de son axe.

7. Véhicule équipé d'une unique roue avant directrice équipé d'une suspension à quadrilatère déformable, dans laquelle ledit quadrilatère déformable comporte une fourche (3) de montage d'une roue directrice (5) du cycle, un pivot de fourche (1) monté fixe avec un poste de pilotage (7) sur un cadre général (O) du cycle par une liaison pivotante, et un premier et un second éléments de liaison (2 et 4) articulés sur la fourche (3) et sur le pivot de fourche (1) en leurs extrémités opposées respectives, le pivot de fourche (1) comprenant deux liaisons articulées (A et B) avec les deux éléments de liaison (2 et 4), ces les liaisons articulées (A et B) du pivot de fourche étant situées de part et d'autre de l'axe de la liaison pivotante entre le pivot de fourche (1) et le cadre général (O) du cycle, les longueurs respectives [BC] et [AD] dudit premier élément de liaison (2) et dudit second élément de liaison (4) étant chacune au moins deux fois supérieures à l'entre-axe [CD] de leurs liaisons articulées respectives avec la fourche (3), de telle sorte que lors de la déformation du quadrilatère du fait de ses quatre liaisons articulées (A, B, C, D) dans un plan normal à l'axe de ladite roue directrice (5), la position du Centre Instantané de Rotation de la fourche (3) par rapport au pivot de fourche (1), définie comme l'intersection des droites passant respectivement par les axes des liaisons articulées du premier élément de liaison (2) avec le pivot de fourche (1) et la fourche (3) et les axes des liaisons articulées du second élément de liaison (4) avec le pivot de fourche (1) et la fourche (3), se situe à l'arrière de la trajectoire dessinée par l'axe de la roue directrice par rapport au sens de déplacement du cycle.

8. Véhicule selon la revendication précédente **caractérisé en ce que** ledit quadrilatère déformable est conçu de telle sorte qu'aucune des liaisons articulées (A, B, C, D) n'est située à l'intérieur de l'espace cylindrique délimité par le pourtour de la roue avant selon la direction de son axe.

9. Véhicule selon la revendication 7 ou 8, **caractérisé en ce qu'**un dispositif amortisseur (8) est intégré au sein du quadrilatère déformable.

## Patentansprüche

1. Radaufhängung mit verformbarem Viereck, bei der das verformbare Viereck eine Gabel (3) zur Montage eines lenkbaren Rades (5) des Rads, ein mit einem Lenkstand (7) fest verbundenes Gabelrohr (1) auf einem über eine Schwenkverbindung verbundenen Gesamtrahmen (0) des Rads und ein erstes und ein zweites Verbindungselement (2 und 4) umfasst, welche an ihren jeweils entgegengesetzten Enden mit der Gabel (3) und mit dem Gabelrohr (1) gelenkig verbunden sind, wobei das Gabelrohr (1) zwei Gelenkverbindungen (A und B) mit den beiden Verbindungselementen (2 und 4) besitzt, wobei diese beiden Gelenkverbindungen (A und B) des Gabelrohrs beidseitig von der Achse der Schwenkverbindung zwischen Gabelrohr (1) und Gesamtrahmen (0) des Rads angeordnet sind, wobei die jeweiligen Längen [BC] und [AD] des ersten Verbindungselements (2) und des zweiten Verbindungselements (4) jeweils mindestens doppelt so groß sind wie der Achsabstand [CD] ihrer jeweiligen Gelenkverbindungen zur Gabel (3), so dass sich bei Verformung des Vierecks dank seiner vier Gelenkverbindungen (A, B, C, D) in einer Normalebene zur Achse des lenkbaren Rades (5) die Position des Momentanpols der Gabel (3) bezogen auf das Gabelrohr (1), die dem Schnittpunkt der Geraden entspricht, die jeweils durch die Gelenkverbindungsachsen des ersten Verbindungselements (2) mit dem Gabelrohr (1) und der Gabel (3) und den Gelenkverbindungsachsen des zweiten Verbindungselements (4) mit dem Gabelrohr (1) und der Gabel (3) verlaufen, hinten an der von der Achse des lenkbaren Rades bezogen auf die Bewegungsrichtung des Rads beschriebenen Bahn befindet.

2. Radaufhängung nach Anspruch 1, **dadurch gekennzeichnet, dass** es sich bei den beiden Verbindungselementen (2 und 4) zwischen Gabel (3) und Gabelrohr (1) um Stangen oder eine Stangeneinheit handelt, deren Verbindungen zur Gabel (3) und zum Gabelrohr (1) als Gelenk oder Drehzapfen ausgebildet sind und deren zwei nebeneinander liegende Verbindungen, in Bezug auf den Antriebsstrang, zumindest des Vierecks als Drehzapfen ausgebildet sind.

3. Radaufhängung nach einem der vorhergehenden Ansprüche, **dadurch gekennzeichnet, dass** innerhalb des verformbaren Vierecks eine Dämpfervorrichtung (8) vorhanden ist.

4. Radaufhängung nach einem der vorhergehenden Ansprüche, bei der ein oberes Ende des Dämpfers (8) über eine Schwenkverbindung mit dem Gabelrohr (1) verbunden ist, während ein unteres Ende des Dämpfers (8) über eine Schwenkverbindung mit einem als Verbindungsteil ausgebildeten Umlenker (9) verbunden ist, wobei der Umlenker (9) seinerseits zum einen über eine Schwenkverbindung mit dem zweiten Verbindungselement (4) und zum anderen über eine Schwenkverbindung mit einer Stange (10) verbunden ist, die ihrerseits über eine Schwenkverbindung mit der Gabel (3) verbunden ist.

5. Radaufhängung nach einem der vorhergehenden Ansprüche, bei der zwei entgegengesetzte Enden des innerhalb des verformbaren Vierecks vorhandenen Dämpfers jeweils mit der Verbindungsachse (B) zwischen dem ersten Verbindungselement (2) und dem Gabelrohr (1) und mit der Verbindungsachse (D) zwischen dem zweiten Verbindungselement (4) und der Gabel (3) verbunden sind.

6. Radaufhängung nach Anspruch 1, **dadurch gekennzeichnet, dass** das verformbare Viereck so ausgebildet ist, dass sich keine der Gelenkverbindungen (A, B, C, D) innerhalb des zylindrischen Raums befindet, welcher durch den Umfang des Vorderrads in dessen Achsrichtung begrenzt wird.

7. Fahrzeug, das mit einem einzigen lenkbaren Vorderrad ausgestattet ist, welches mit einer Aufhängung mit einem verformbaren Viereck ausgestattet ist, bei der das verformbare Viereck eine Gabel (3) zur Montage eines lenkbaren Rades (5) des Rads, ein mit einem Lenkstand (7) fest verbundenes Gabelrohr (1) auf einem über eine Schwenkverbindung verbundenen Gesamtrahmen (0) des Rads und ein erstes und ein zweites Verbindungselement (2 und 4) umfasst, welche an ihren jeweils entgegengesetzten Enden mit der Gabel (3) und mit dem Gabelrohr (1) gelenkig verbunden sind, wobei das Gabelrohr (1) zwei Gelenkverbindungen (A und B) mit den beiden Verbindungselementen (2 und 4) besitzt, wobei diese beiden Gelenkverbindungen (A und B) des Gabelrohrs beidseitig von der Achse der Schwenkverbindung zwischen Gabelrohr (1) und Gesamtrahmen (0) des Rads angeordnet sind, wobei die jeweiligen Längen [BC] und [AD] des ersten Verbindungselements (2) und des zweiten Verbindungselements (4) jeweils mindestens doppelt so groß sind wie der Achsabstand [CD] ihrer jeweiligen Gelenkverbindungen zur Gabel (3), so dass sich bei Verformung des Vierecks dank seiner vier Gelenkverbindungen (A, B, C, D) in einer Normalebene zur Achse des lenkbaren Rades (5) die Position des Momentanpols der Gabel (3) bezogen auf das Gabelrohr (1), die dem Schnittpunkt der Geraden entspricht, die jeweils durch die Gelenkverbindungsachsen des ersten Verbindungselements (2) mit dem Gabelrohr (1) und der Gabel (3) und den Gelenkverbindungsachsen des zweiten Verbindungselements (4) mit dem Gabelrohr (1) und der Gabel (3) verlaufen, hinten an der von der Achse des lenkbaren Rades bezogen auf die Bewegungsrichtung des Rads beschriebenen Bahn befindet.

8. Fahrzeug nach dem vorhergehenden Anspruch, **dadurch gekennzeichnet, dass** das verformbare Viereck so ausgebildet ist, dass sich keine der Gelenkverbindungen (A, B, C, D) innerhalb des zylindrischen Raums befindet, welcher durch den Umfang des Vorderrads in dessen Achsrichtung begrenzt wird.

9. Fahrzeug nach Anspruch 7 oder 8, **dadurch gekennzeichnet, dass** innerhalb des verformbaren Vierecks eine Dämpfervorrichtung (8) vorhanden ist.

## Claims

1. A deformable quadrilateral cycle suspension, wherein said deformable quadrilateral comprises a fork (3) for mounting a steering wheel (5) of the cycle, a fork pivot (1) fixedly mounted with a steering station (7) on a main frame (0) of the cycle by a pivoting connection, and a first and a second connecting element (2 and 4) articulated on the fork (3) and on the fork pivot (1) at their respective opposite ends, the fork pivot (1) comprising two articulated connections (A and B) with the two connecting elements (2 and 4), these articulated connections (A and B) of the fork pivot being situated on either side of the pivoting connection's axis between the fork pivot (1) and the main frame (0) of the cycle, the respective lengths [BC] and [AD] of said first connecting element (2) and of said second connection element (4) each being at least twice greater than the center axis [CD] of their respective articulated connections with the fork (3), in such a way that, during the deformation of the quadrilateral due to its four articulated connections (A, B, C, D) in a plane normal to the axis of said steering wheel (5), the position of the instantaneous center of rotation of the fork (3) relative to the fork pivot (1), defined as the intersection of the straight lines passing respectively through the axes of the articulated connections of the first connecting element (2) with the fork pivot (1) and the fork (3) and the axes of the articulated connections of the second connecting element (4) with the fork pivot (1) and the fork (3), is located at the rear of the trajectory drawn by the axis of the steering wheel with respect to the traverse direction of the cycle.

2. The cycle suspension according to claim 1, **characterized in that** the two connecting elements (2 and 4) of the fork (3) to the fork pivot (1) are connecting rods or a set of connecting rods, the connections of which to the fork (3) and the fork pivot (1) are of the ball joint or pivot type and of which two adjacent connections, in terms of kinematic linkage, at least of the quadrilateral are of pivot type.

3. The cycle suspension according to one of the preceding claims, **characterized in that** a shock absorber (8) is integrated within the deformable quadrilateral.

4. The cycle suspension according to the preceding claim, wherein an upper end of the shock absorber (8) is connected to the fork pivot (1) via a pivot connection while a lower end of said shock absorber (8) is connected via a pivot connection to a tipper (9) forming a connecting piece, said tipper (9) being itself connected, on the one hand, to the second connecting element (4) via a pivot connection, and on the other hand, via a pivot connection, to a connecting rod (10) which is connected to the fork (3) via a pivot connection.

5. The cycle suspension according to the preceding claim, wherein two opposite ends of the shock absorber integrated within the deformable quadrilateral are respectively connected to the connection axis (B) between the first connecting element (2) and the fork pivot (1) and to the connection axis (D) between the second connecting element (4) and the fork (3).

6. The cycle suspension according to claim 1, **characterized in that** the deformable quadrilateral is designed in such a way that none of the articulated connections (A, B, C, D) is located inside the cylindrical space defined by the periphery of the front wheel according to the direction of its axis.

7. A vehicle equipped with a single front steering wheel equipped with a deformable quadrilateral suspension, in which said deformable quadrilateral comprises a fork (3) for mounting a steering wheel (5) of the cycle, a fork pivot (1) fixedly mounted with a steering station (7) on a main frame (0) of the cycle by a pivoting connection, and a first and a second connecting element (2 and 4) articulated on the fork (3) and on the fork pivot (1) at their respective opposite ends, the fork pivot (1) comprising two articulated connections (A and B) with the two connecting elements (2 and 4), these articulated connections (A and B) of the fork pivot being situated on either side of the pivoting connection's axis between the fork pivot (1) and the main frame (0) of the cycle, the respective lengths [BC] and [AD] of said first connecting element (2) and of said second connection element (4) each being at least twice greater than the center axis [CD] of their respective articulated connections with the fork (3), in such a way that, during the deformation of the quadrilateral due to its four articulated connections (A, B, C, D) in a plane normal to the axis of said steering wheel (5), the position of the instantaneous center of rotation of the fork (3) relative to the fork pivot (1), defined as the intersection of the straight lines passing respectively through the axes of the articulated connections of the first connecting element (2) with the fork pivot (1) and the fork (3) and the axes of the articulated connections of the second connecting element (4) with the fork pivot (1) and the fork (3), is located at the rear of the trajectory drawn by the axis of the steering wheel with respect to the traverse direction of the cycle.

8. The vehicle according to the preceding claim, **characterized in that** said deformable quadrilateral is designed in such a way that none of the articulated connections (A, B, C, D) is located inside the cylindrical space defined by the periphery of the front wheel according to the direction of its axis.

9. The vehicle according to claim 7 or 8, **characterized in that** a shock absorber (8) is integrated within the deformable quadrilateral.
